# EUROPEAN PATENT SPECIFICATION

(11) **EP 0 733 513 B1**
(45) Date of publication and mention of the grant of the patent: **26.08.1998**
(21) Application number: 96100775.4
(22) Date of filing: 19.01.1996
(51) Int. Cl.: B60R 21/00

(54) **A vehicle impact sensor arrangement for detecting a side impact**
Fahrzeugseitenaufprallsensor
Dispositif de détection d'impact latéral pour véhicule

(30) Priority: 24.03.1995 US 409824
(43) Date of publication of application: 25.09.1996
(73) Proprietor: AUTOLIV DEVELOPMENT AKTIEBOLAG, 447 83 Vargarda (SE)
(72) Inventor: Kruse, Dion, S-441 33 Alingsas (SE); Haland, Yngve, S-230 11 Falsterbo (SE)
(74) Representative: Frankland, Nigel Howard

(56) References cited:
- DE-A- 4 115 560
- DE-A- 4 226 869
- GB-A- 1 403 597
- GB-A- 2 266 075
- GB-A- 2 289 448
- ATZ AUTOMOBILTECHNISCHE ZEITSCHRIFT, vol. 96, no. 10, 1 October 1994, pages 618-619, XP000469483 GUIDO WETZEL: "Steuerung eines Mehrfach-Rückhaltesystems"

## Description

THE PRESENT INVENTION relates to a vehicle side impact detecting arrangement, and more particularly relates to a vehicle side impact detecting arrangement adapted to sense an impact on a side door of a vehicle and to activate a safety device within the vehicle such as an air-bag or a seat belt pre-tensioner.

When a vehicle, such as a motor car, is involved in an accident the vehicle can accelerate or decelerate rapidly. In such a situation a person travelling within the vehicle may continue to move at the original speed of the vehicle, due to inertia, and may thus impact with part of the vehicle which has accelerated or decelerated. For example, if a vehicle is subjected to a front impact, the main body of the vehicle may stop relatively rapidly, whilst the person in the vehicle continues to travel forwardly. Thus, in effect, the person travelling in the vehicle is thrown forwardly on to a fixed part of the vehicle, such as the steering wheel or the dash-board. In a side impact situation, however, a person sitting near the site of the impact may be hit by the intruding outer shell of the vehicle before the speed of the main body of the vehicle is changed and very soon after the impact is initiated. These side impact conditions demand special detecting arrangements.

If a safety device is to be activated in response to a side impact, then the detector which detects the side impact must be able to respond to a side impact before the inside part of the door of the vehicle hits the seat or hits the person sitting on the seat. Because the total distance between the outer skin of the vehicle and the seat is very short, the detector has to react very rapidly.

It has been proposed previously to mount side impact sensors in the door of a vehicle, even if the safety device is not located in the door. A signal transmission line such as an electric wire or a shock tube such as that sold under the Registered Trade Mark **NONEL** extends from the sensor to the safety device.

It is to be appreciated that if an acceleration responsive sensor is mounted in the door, difficulties may arise. Firstly, the door may be subjected to substantial accelerations due to slamming of the door, and also if the door is inadvertently opened whilst the vehicle is parked adjacent a wall, bollard or lamp-post. This may cause inadvertent triggering of the safety device. Additionally, if the safety device is not itself mounted within the door, it is difficult to ensure that the acceleration responsive sensor is adequately connected to the safety device. Any wiring or shock tube must extend across the hinge area of the door, where it will firstly be exposed and where secondly, it will be subjected to movement and consequently wear, as the door is repeatedly opened and closed during operation of the vehicle.

It is to be understood that in a side impact accident, if an object, such as the bumper or fender of another vehicle, hits the centre area of the lower half of a side door, for example, at a position above the door sill, behind the "A"-Pillar and in front of the "B"-Pillar, the inside of the door may well be deformed to hit the occupant of the vehicle before any part of the chassis or monocoque shell of the vehicle is deformed, and well before the whole chassis is exposed to a noticeable acceleration. The reason for this is that in this particular area, a typical door is very soft and does not possess any substantial strength.

GB-A-2,266,075 discloses a vehicle impact sensor arrangement for sensing a side impact. The sensor is mounted on part of the monocoque shell of a motor vehicle, typically a door sill. The sensor responds when it is touched, during a side impact, by a re-inforcing element initially mounted in the door of the vehicle. The Specification teaches that the sensor may be an electrical sensor comprising a switch or a pyrotechnic sensor comprising a percussion cap. The sensor is responsive to a predetermined deformation of the door or a predetermined force applied to the sensor as a consequence of deformation of the door. The sensor is effectively "squeezed" between the deformed part of the door and the monocoque shell or chassis of the vehicle.

The present invention seeks to provide an improved vehicle side impact detector arrangement and, more particularly, seeks to provide an improved vehicle side impact detector arrangement which, in preferred embodiments, may provide a rapid response to a side impact.

According to this invention there is provided a vehicle side impact detecting arrangement to sense an impact on a side door of a vehicle and to activate a safety device, the sensor arrangement comprising a sensor responsive to its own acceleration, the sensor arrangement being mounted on part of the chassis or monocoque shell of the vehicle located adjacent the side door of the motor vehicle, the lower part of the door above the door sill being reinforced to transmit the deformation of its outer skin to its inner surface, means being provided to retain the sensor in an initial predetermined position relative to the said chassis or monocoque shell, means being provided to apply a force to the sensor in response to a deformation of the outer skin of said door, wherein the means to retain the sensor in the predetermined initial position comprise yieldable means adapted to permit the sensor to move from the initial position when the force applied to the sensor exceeds a predetermined minimum force, which is less than the force needed to deform the part of the chassis or monocoque shell on which the sensor is mounted.

Conveniently the sensor is located within a housing located under the front seat of the motor vehicle.

Advantageously a drive rod extends from the sensor to a position adjacent the inner surface of the lower part of the door.

Conveniently in one embodiment a spring is provided, one end of which engages the sensor and the other end of which engages a point which is fixed relative to the chassis or monocoque shell of the motor vehicle. The spring may be a helical spring or any appropriate form of spring. In an alternative embodiment the sensor is retained in the initial position by a projection made of a frangible or breakable material. In a further alternative embodiment the sensor is retained in the initial position by a projection formed of a deformable material. The deformable material may comprise a soft deformable metal such as lead, but other deformable materials may be used.

It is to be appreciated that in the above-mentioned embodiments of the invention, the sensor may be contained within a chamber which is mounted for movement within a housing. The housing may be mounted on part of the chassis or monocoque shell of the vehicle. The means which retain the sensor in the initial predetermined position engage the interior of the housing and also engage the chamber which accommodates the sensor.

Preferably the sensor arrangement comprises a first part which is mounted on said part of the chassis or monocoque shell, and also a second part, which is movable to the first part, the said spring biassing the second part to a predetermined position relative to the first part, and thus to a predetermined position relative to the chassis or monocoque shell, the second part being movable from the determined position against the bias of the spring in response to inward movement of part of the said side door of the vehicle, the said second part carrying an accelerometer adapted to respond to an acceleration of the second part in excess of a predetermined threshold.

It is to be appreciated that in a preferred embodiment of the invention the sensor responsive to its own acceleration is an accelerometer.

Conveniently the output of the accelerometer is connected to a processor adapted to determine whether the output meets at least one criterion from a range of one or more criteria, the output of the processor activating a safety device, one criterion comprising a relatively high and rapidly rising acceleration that provides a relatively early activation of the safety device, and another criterion comprising a lower and more slowly rising acceleration that provides a later activation of the safety device.

It is to be understood that the processor may be connected to a single safety device, that safety device being activated when the output from the accelerometer meets a first criterion or meets a second criterion. Alternatively, however, the processor may be connected to two different safety devices, one of which is activated when the output of the processor meets one criterion and the other of which is activated when the output of the processor meets another criterion.

In order that the invention may be more readily understood, and so that further features thereof may be appreciated, the invention will now be described, by way of example, with reference to the accompanying drawings in which
FIGURE 1 is a partial cross-sectional view of a motor vehicle provided with a side impact detecting arrangement in accordance with the invention,
FIGURE 2 is a sectional view corresponding to Figure 1 illustrating a modified embodiment of the invention, and
FIGURE 3 is a block diagram.

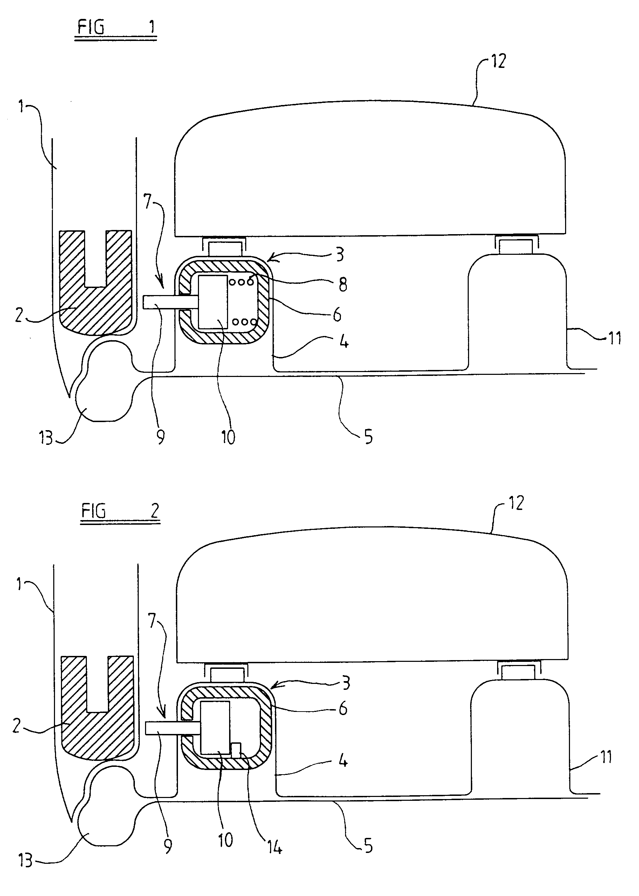

Referring initially to Figure 1, it is to be understood that this is a vertical cross-sectional view of part of a motor vehicle in the region of the door and the driver's seat.

Figure 1 illustrates a side door 1 of a motor vehicle, the lower part of the door above the door sill being provided with an internal reinforcing element 2. The internal reinforcing element is provided in the lower part of the door and extends from the front part of the door to the rear part of the door.

A side impact detecting arrangement is provided which includes a sensor arrangement 3 mounted within a ridge 4 forming part of the floor 5 of the motor vehicle. The sensor arrangement 3 comprises an outer housing 6 and a movable part 7. The movable part 7 is movable relative to the housing 6.

In this embodiment the movable part 7 is biassed to an initial position (as illustrated) by means of a helical spring 8 which is contained within the housing 5. One end of the helical spring engages the interior of the housing 5, (which is a part that is fixed in position relative to the chassis or monocoque shell of the vehicle) and the other end of the helical spring engages the movable part 7.

The movable part 7 comprises a drive rod 9, having a free end located immediately adjacent the reinforcement 2 provided in the door 1, and a chamber 10 carried by the drive rod 9 which contains an acceleration responsive sensor, that is to say, a sensor that is responsive to its own acceleration.

The chamber 10 is located within the housing 6 and is engaged by the spring 8.

If the acceleration responsive sensor is subjected to a force, for example as a result of inward movement of the door 1, with the force being applied to the free end of the drive rod 9, the acceleration responsive sensor contained within the chamber 10 will be moved towards the right, as illustrated, whilst the spring 8 is compressed. The acceleration responsive sensor will provide an output signal if subjected to an acceleration in excess of a predetermined acceleration.

The output signal may cause deployment of a safety device such as an air-bag or a seat-belt pretensioner. The air-bag may be so designed and located that when the air-bag is inflated the air-bag is located between the door 1 of the motor vehicle and the torso of a person sitting on the seat.

It is thus to be understood that the sensor contained within the chamber 10 will only move if the force applied to the door 1 is sufficient to compress the spring 8, whilst causing the chamber 10 to move with an acceleration in excess of a predetermined acceleration. Assuming that the force is of sufficient magnitude, the sensor will move against the bias of the spring and will provide an output signal. The output signal will be closely related to, and may be considered to be indicative of the acceleration of the reinforcement 2 provided in the door 1. If the signal from the sensor exceeds a predetermined threshold, equivalent to a predetermined acceleration, which may be equivalent to an impact of a predetermined severity, the sensor will generate an output signal. The sensor could alternatively be an accelerometer generating a signal proportional to its acceleration. The safety device could, for example, be activated as the integrated value of the signal reaches a predetermined value.

It is to be observed that the ridge 4 comprises one ridge of a pair of ridges 4,11 which together support the squab 12 of the seat for the driver or occupant of the vehicle.

It is to be noted that the floor 5 terminates, in the region of the lower part of the door 1, with a door sill 13.

It is to be appreciated that if a side impact should occur, if the side impact occurs anywhere in the region of the door 1, the reinforcing element 2 will move inwardly as a consequence of the side impact. If the part of the reinforcing element adjacent the push rod 9 imparts a sufficient acceleration to that push rod 9, then the sensor will provide an output which will deploy the safety device.

It is to be appreciated that the function of the spring 8 is to maintain the sensor in a predetermined initial position, such that the drive rod is located adjacent the reinforced part of the door. The spring is, however, yieldable to permit movement of the sensor when subjected to a force in excess of a predetermined minimum force.

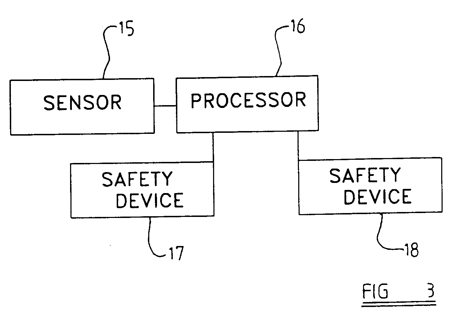

Referring now to Figure 2 of the accompanying drawings, where like references have been used for like parts, it will be appreciated that the illustrated arrangement is virtually the same as the arrangement of Figure 1, the major difference being that the spring 8 has been omitted, and has been replaced by a projecting peg 14 formed on the interior of the housing 6 which engages part of the chamber 10 to retain the chamber 10 in the predetermined initial position as illustrated. The peg 14 may be a frangible peg or may be a peg which is made of a yieldable or deformable material, such as a soft metal, e.g. lead.

The embodiment illustrated in Figure 2 will operate in a similar manner to the embodiment of Figure 1, with the accelerometer being retained in the predetermined position until a side impact occurs. If a sufficient force is applied to the drive rod 9, the projection will break or snap, if the projection is of frangible material, or the projection will yield, if the projection is made, for example, of a soft metal, and in either case the acceleration responsive sensor will then be able to move towards the right, as illustrated. The acceleration experienced by the sensor will, as in the embodiment of Figure 1, be related to the acceleration imparted to the reinforcement 2 provided in the door 1.

It is to be appreciated that the means which retain the sensor in the initial predetermined position may, instead of being a breakable peg or a yieldable peg, form part of a snap joint or other mechanism adapted to yield when subjected to a sufficient force.

It is to be appreciated that whilst, in the illustrated embodiments of the invention, the sensor arrangement 3 is located in a protected position within a housing 6 located within a ridge 4 forming part of the floor of the motor vehicle, the sensor could be located in alternate positions. Indeed, the sensor, within an appropriate housing, could be located immediately adjacent the base of the door, thus making it unnecessary to have a drive rod at all.

For example, the sensor arrangement 3 could be mounted on an appropriate part of the chassis of the vehicle, being retained in a predetermined initial position by relatively weak means, such as a relatively weak solder or a relatively weak brazing. In such a case, if the vehicle is subjected to a side impact, the appropriate part of the door would impact with the housing containing the acceleration responsive sensor, and the housing would then move relative to the chassis.

It is to be appreciated that in the described embodiment of the invention, the force needed to move the sensor, that is to say the force needed to compress the spring 8 or to break or deform the peg 14 is lower than the force required to deform the chassis or monocoque shell of the motor vehicle.

Various types of acceleration responsive sensors can be utilised in different embodiments of the invention. A typical sensor may comprise a pendulum which passes through a ring. When the pendulum has swung by a predetermined distance, an electric circuit is completed between the pendulum and the ring. An alternative form of sensor comprises a flexible element having strain gauges formed on the surface thereof, the flexible element being located to extend vertically from a support, and having a mass provided at the free end. If the support is accelerated, the flexible element is deflected, due to the inertia of the mass, thus developing a strain in the strain gauges. Whilst many types of sensors may be utilised, it is envisaged that the sensor will provide an output signal very swiftly in the event that a serious or significant side impact is experienced. The sensor will provide an output before any deformation of the chassis has occurred. All that is required, in order to activate the sensor, is an inward deformation of part of the side door of the vehicle, that inward deformation having a force in excess of a predetermined minimum force.

It is to be appreciated that since an acceleration responsive sensor is provided which is mounted in a predetermined position relative to the chassis of the vehicle, that sensor may also be adapted to sense the acceleration of the whole chassis of the vehicle, even if the door is not deformed. Consequently, the sensor may be responsive to side impacts of the motor vehicle, hitting the part ion front of or behind the doors. In this case, the whole vehicle and not only the door will move relative to the occupant.

The acceleration level of such an impact will, however, be much lower, later and slower than for a deformation of the door. Even if the same sensor is used for both types of impacts, different triggering criteria will preferably be used.

In the embodiments of Figures 1 and 2, it is preferred that the total free play in the illustrated system is as low as possible, and is preferably less than 50 mm. The free play includes any spaces between the outer and inner skins of the door and the reinforcing element, and also the space between the interior of the door and the drive rod.

Referring now to Figure 3 of the accompanying drawings, which is a block diagram, a sensor 15, in the form of an accelerometer is illustrated, which may be the sensor present within the chamber 10 described above. The output of the sensor is connected to a processor 16 which is adapted to determine whether the output of the sensor 15 meets with at least criterion from a range of available criteria. For example, one criterion may require a high, quick rising acceleration. Such a criteria would be indicative of a side impact on the door of the vehicle, which has caused the chamber 10 to move very rapidly towards the right in the embodiments illustrated in Figures 1 and 2. This criterion would lead to relatively early activation of the safety device. An alternative criterion would be a rising acceleration, which rises over a relatively long period of time in a relatively slow way, rising also to a lower absolute acceleration at its peak. Such a criterion would be indicative of a side impact on the vehicle, not in the region of the door, but at another point on the side of the vehicle. The criterion would lead to a later activation of the safety device.

If the processor 16 determines that at least one of the predetermined criterion has been met, the processor will provide an output which will activate a safety device, such as the safety device 17, which may be an air-bag or a seat-belt pretensioner. However, it is to be understood that the output of the processor may be connected to more than one safety device. In other words, a second safety device, such as the safety device 18 may be provided. Here it is to be understood that the processor may be such that if the output of the sensor 15 meets one criterion, then the safety device 17 is activated, whereas if the output of the sensor 15 meets another, different, criterion, then a different safety device 18 will be activated. If the output of the sensor 15 meets a further criterion, both of the safety devices 17 and 18 will be activated.

## Claims

1. A vehicle side impact detecting arrangement to sense an impact on a side door(1) of a vehicle and to activate a safety device(17,18), the sensor arrangement(3) comprising a sensor(10) responsive to its own acceleration, the sensor arrangement being mounted on part(4) of the chassis or monocoque shell of the vehicle located adjacent the side door(1) of the motor vehicle, the lower part of the door above the door sill being reinforced(2) to transmit the deformation of its outer skin to its inner surface, means(8) being provided to retain the sensor in an initial predetermined position relative to the said chassis or monocoque shell, means(9) being provided to apply a force to the sensor in response to a deformation of the outer skin of said door, wherein the means to retain the sensor in the predetermined initial position comprise yieldable means(8) adapted to permit the sensor to move from the initial position when the force applied to the sensor exceeds a predetermined minimum force, which is less than the force needed to deform the part of the chassis or monocoque shell on which the sensor is mounted.

2. An arrangement according to Claim 1 wherein the sensor(10) is located within a housing(6) located under the front seat of the motor vehicle.

3. An arrangement according to any one of the preceding Claims wherein a drive rod(9) extends from the sensor to a position adjacent the inner surface of the lower part of the door, constituting the means to apply a force to the sensor.

4. A sensor arrangement according to any one of Claims 1 to 3 wherein the yieldable means(8) comprise a spring.

5. An arrangement according to any one of Claims 1 to 3 when in the yieldable means(14) comprise a frangible or breakable element.

6. An arrangement according to any one of Claims 1 to 3 wherein the yieldable means(14) comprise a deformable element.

7. An arrangement according to Claim 4 wherein the sensor arrangement comprises a first part which is mounted on said part(4) of the chassis or monocoque shell, and also a second part(7), which is movable to the first part, the said spring(8) biassing the second part to a predetermined position relative to the first part, and thus to a predetermined position relative to the chassis or monocoque shell, the second part being movable from the determined position against the bias of the spring in response to inward movement of part of the said side door(1) of the vehicle, the said second part carrying an accelerometer adapted to respond to an acceleration of the second part in excess of a predetermined threshold.

8. An arrangement according to any one of Claims 1 to 6 wherein the sensor responsive to its own acceleration is an accelerometer.

9. An arrangement according to Claim 7 or 8 wherein the output of the accelerometer is connected to a processor(16) adapted to determine whether the output meets at least one criterion from a range of two or more criteria, the output of the processor activating a safety device(17,18), one criterion comprising a relatively high and rapidly rising acceleration that provides a relatively early activation of the safety device, and another criterion comprising a lower and more slowly rising acceleration that provides a later activation of the safety device.

## Patentansprüche

1. Anordnung zum Erfassen eines Fahrzeugseitenaufpralls, um einen Aufprall auf eine seitliche Tür (1) eines Fahrzeugs zu erfassen und eine Sicherheitseinrichtung (17, 18) auszulösen, wobei die Sensoranordnung (3) einen Sensor (10) aufweist, der auf seine eigene Beschleunigung anspricht, wobei die Sensoranordnung auf einem Teil (4) des Fahrgestells oder der Monocoque-Außenhaut des Fahrzeugs angebracht und benachbart zur seitlichen Tür (1) des Motorfahrzeugs angeordnet ist, wobei der untere Teil der Tür oberhalb der Türschwelle (2) verstärkt ist, um die Deformation ihrer Außenhaut an ihre Innenfläche weiterzuleiten, wobei ein Mittel (8) vorgesehen ist, um den Sensor in einer anfänglich vorbestimmten Position relativ zu dem Fahrgestell oder der Monocoque-Außenhaut zu halten, und ein Mittel (9) vorgesehen ist, um eine Kraft auf den Sensor ansprechend auf eine Verformung der Außenhaut der Tür auszuüben, wobei das Mittel zum Halten des Sensors in der vorbestimmten Anfangsposition ein nachgiebiges Mittel (8) aufweist, das dazu bestimmt ist, zu ermöglichen, daß sich der Sensor aus seiner Anfangsposition bewegt, wenn die auf den Sensor ausgeübte Kraft eine vorbestimmte Minimalkraft überschreitet, die kleiner ist als die Kraft, die erforderlich ist, um den Teil des Fahrgestells oder der Monocoque-Außenhaut, auf dem der Sensor gehalten ist, zu deformieren.

2. Anordnung nach Anspruch 1, dadurch gekennzeichnet, daß der Sensor (10) innerhalb eines Gehäuses (6) untergebracht ist, welches sich unter dem Vordersitz des Motorfahrzeugs befindet.

3. Anordnung nach Anspruch 1 oder 2, dadurch gekennzeichnet, daß sich eine Treibstange (9) von dem Sensor zu einer Position benachbart zur Innenfläche des unteren Teils der Tür erstreckt, wodurch das Mittel zum Aufbringen einer Kraft auf den Sensor gebildet wird.

4. Sensoranordnurg nach einem der vorangehenden Ansprüche, dadurch gekennzeichnet, daß das nachgiebige Mittel (8) aus einer Feder besteht.

5. Anordnung nach einem der Ansprüche 1 bis 3, dadurch gekennzeichnet, daß das nachgiebige Element (14) ein zerbrechbares oder zerreißbares Element beinhaltet.

6. Anordnung nach einem der Ansprüche 1 bis 3, dadurch gekennzeichnet, daß das nachgiebige Element (14) aus einem verformbaren Element besteht.

7. Anordnung nach Anspruch 4, dadurch gekennzeichnet, daß die Sensoranordnung einen ersten Teil umfaßt, der auf dem Teil (4) des Fahrgestells oder der Monocoque-Außenhaut angebracht ist, und einen zweiten Teil (7), der gegenüber dem ersten Teil bewegbar ist, wobei die Feder (8) den zweiten Teil in eine vorbestimmte Position relativ zu dem ersten Teil vorspannt, und somit in eine vorbestimmte Position relativ zu dem Fahrgestell oder der Monocoque-Außenhaut, wobei der zweite Teil aus der vorbestimmten Position gegen die Vorspannung der Feder ansprechend auf eine Einwärtsbewegung eines Teils der seitlichen Tür (1) des Fahrzeugs bewegbar ist, wobei der zweite Teil einen Beschleunigungsmesser trägt, der dazu bestimmt ist, auf eine Beschleunigung des zweiten Teils, die eine vorbestimmte Schwelle überschreitet, anzusprechen.

8. Anordnung nach einem der Ansprüche 1 bis 6, dadurch gekennzeichne, daß der auf seine eigene Beschleunigung ansprechende Sensor ein Beschleunigungsmesser ist.

9. Anordnung nach Anspruch 7 oder 8, dadurch gekennzeichnet, daß der Ausgang des Beschleunigungsmessers an einen Prozessor (16) angeschlossen ist, der dazu bestimmt ist, festzustellen, ob das Ausgangssignal zumindest ein Kriterium aus einem Bereich von zwei oder mehr Kriterien erfüllt, wobei das Ausgangssignal des Prozessors eine Sicherheitseinrichtung (17, 18) auslöst, wobei ein Kriterium eine relativ hohe und schnell ansteigende Beschleunigung ist, die eine relativ frühe Auslösung der Sicherheitseinrichtung bewirkt, und ein anderes Kriterium eine geringere und langsamer ansteigende Beschleunigung ist, die eine spätere Auslösung der Sicherheitseinrichtung bewirkt.

## Revendications

1. Un dispositif de détection d'impact latéral pour véhicule, conçu pour appréhender un impact sur une porte latérale (1) d'un véhicule et pour activer un dispositif de sécurité (17, 18), le dispositif de détection (3) comprenant un capteur (10) réagissant à son accélération propre, le dispositif de détection étant monté sur une partie (4), du châssis ou de l'enveloppe monocoque du véhicule, située en un point adjacent de la porte latérale (1) du véhicule automobile, la partie inférieure située au-dessus du seuil de porte étant renforcée (2), pour transmettre la déformation de sa peau extérieure à sa surface intérieure, des moyens (8) étant prévus pour retenir le capteur dans une position prédéterminée initiale par rapport audit châssis ou enveloppe monocoque, des moyens (9) étant prévus pour appliquer une force au capteur, en réponse à une déformation de la peau extérieur de ladite porte, dans lequel les moyens, prévus pour retenir le capteur dans la position initiale prédéterminée, comprennent des moyens déformables (8), adaptés pour permettre au capteur de se déplacer par rapport à la position initiale, lorsque la force appliquée au capteur dépasse une force minimum prédéterminée, inférieure à la force nécessaire pour déformer la partie du châssis ou de l'enveloppe monocoque sur laquelle le capteur est monté.

2. Un dispositif selon la revendication 1, dans lequel le capteur (10) est monté à l'intérieur d'un boîtier (6) placé sous le siège avant du véhicule automobile.

3. Un dispositif selon l'une quelconque des revendications précédentes, dans lequel une tige d'entraînement (9) s'étend, depuis le capteur jusqu'à une position adjacente à la surface intérieure de la partie inférieure de la porte, constituant le moyen d'application d'une force au capteur.

4. Un dispositif de détection selon l'une quelconque des revendications 1 à 3, dans lequel le moyens déformables (8) comprennent un ressort.

5. Un dispositif de détection selon l'une quelconque des revendications 1 à 3, dans lequel les moyens déformables (14) comprennent un élément friable ou brisable.

6. Un dispositif de détection selon l'une quelconque des revendications 1 à 3, dans lequel les moyens déformables (14) comprennent un élément déformable.

7. Un dispositif de détection selon la revendication 4, dans lequel le dispositif de détection comprend une première partie, qui est montée sur ladite partie latérale (4) du châssis ou de l'enveloppe monocoque, et également une deuxième partie (7), qui est déplaçable par rapport à la première partie, ledit ressort (8) déplaçant la deuxième partie en une position relative prédéterminée par rapport à la première partie et, ainsi, en une position prédéterminée par rapport au châssis ou à l'enveloppe monocoque, la deuxième partie étant déplaçable à partir de la position déterminée, à l'encontre de la déformation du ressort, en réponse au déplacement vers l'intérieur de la partie de ladite porte latérale (1) du véhicule, ladite deuxième partie portant un accéléromètre, adapté pour répondre à une accélération de la deuxième partie, en cas de dépassement d'un seuil de valeur prédéterminé.

8. Un dispositif de détection selon l'une quelconque des revendications 1 à 6, dans lequel le capteur, réagissant à sa propre accélération, est un accéléromètre.

9. Un dispositif de détection selon la revendication 7 ou 8, dans lequel la sortie de l'accéléromètre est reliée à un processeur (16) adapté pour déterminer si le signal de sortie satisfait à au moins un critère parmi une plage de deux critères ou plus, le signal de sortie du processeur activant un dispositif de sécurité (17, 18), un critère comprenant une accélération relativement élevée et augmentant rapidement, qui produit une activation relativement précoce du dispositif de sécurité, et un autre critère comprenant une accélération plus faible et augmentant plus lentement, produisant une activation plus tardive du dispositif de sécurité.
